# EUROPEAN PATENT APPLICATION

(11) **EP 1 770 359 A2**
(43) Date of publication of application: **04.04.2007**
(21) Application number: 06254596.7
(22) Date of filing: 04.09.2006
(51) Int. Cl.: G01C 15/00

(54) **Laser Level**

(30) Priority: 28.09.2005 GB 0519744
(71) Applicant: Mo,, David, Hong Kong (CD)
(72) Inventor: Mo,, David, Hong Kong (CD)
(74) Representative: Howe, Steven

(57) **Abstract**

A laser level (10) is disclosed as including two spirit level tubes (42, 44) fixedly engaged with an extruded aluminium tube bracket (36); and a laser-emitting module (34) fixedly engaged with an extruded aluminium laser bracket (38), in which the tube bracket (36) and laser bracket (38) are engaged with each other.

## Description

This invention relates to a laser level, and in particular a laser level emitting at least one scanning laser beam for indicating a horizontal and/or vertical line upon a vertical surface, e.g. a wall.

As such devices are hand-held tools, the components should preferably be of light weight. On the other hand, as such devices are relied upon to provide accurate indication of horizontal and vertical lines on a vertical surface, the components, in particular those involved with the alignment of the spirit level tubes and the laser-emitting module, should be sufficiently rigid. In most existing laser levels, the components for mounting the spirit level tubes or the laser module are either too heavy or not rigid enough.

It is thus an object of the present invention to provide a laser level in which the aforesaid shortcomings are mitigated or at least to provide a useful alternative to the public.

According to the present invention, there is provided a laser level including at least a spirit level tube fixedly engaged with a first extruded engagement member; and at least a laser emitter fixedly engaged with a second extruded engagement member, wherein said first and second engagement members are engaged with each other.

An embodiment of the present invention will now be described, by way of example only, with reference to the accompanying drawings in which:
Fig. 1 is an exploded view of a laser level according to the present invention;
Fig. 2 is a top view of the laser level shown in Fig. 1;
Fig. 3 is a bottom view of the laser level shown in Fig. 1;
Fig. 4A is a top view of the laser level shown in Fig. 1 with the top housing and switch cover removed;
Fig. 4B is a sectional view taken along the line A-A in Fig. 4A, including the top housing and switch cover;
Fig. 4C is an end view of the laser level shown in Fig. 4A;
Fig. 5 is a top perspective view of the laser level shown in Fig. 4A;
Fig. 6A is a top view of the tube bracket and laser bracket inter-engaged with each other;
Fig. 6B is a sectional view taken along the line B-B in Fig. 6A;
Fig. 6C is a front view of Fig. 6A;
Fig. 6D is an end view of Fig. 6A;
Fig. 6E is a bottom view of Fig. 6A;
Fig. 6F is a partial sectional view taken along the line C-C in Fig. 6A; and
Fig. 6G is a top perspective view of Fig. 6A.

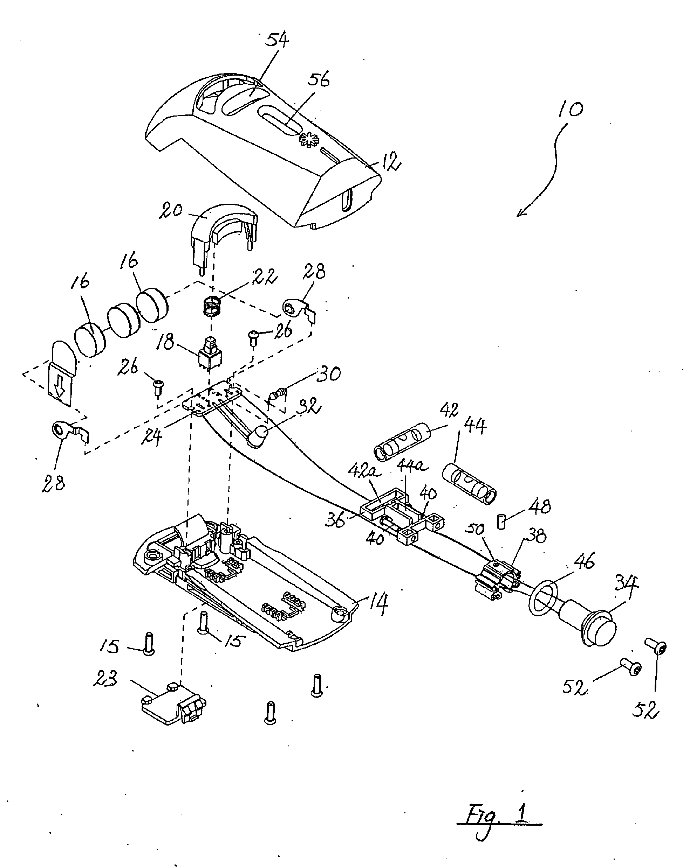

Referring firstly to Figs. 1 to 5, a laser level according to the present invention is generally designated as 10. The laser level 10 includes a top housing 12 and a bottom housing 14 which are engaged with each other by screws 15 to define a cavity for housing various components of the laser level 10. The laser level 10 is powered by a number of dry batteries 16, and operable by a switch 18. The switch 18 is engaged with a switch cover 20 *via* a spring 22, so that the laser level 10 may be selectively activated and deactivated by pressing the switch cover 20. A cell door 23 is provided to allow access to a chamber housing the batteries 16, e.g. for replacement of batteries 16.

A printed circuit board (PCB) 24 is secured to the bottom housing 14 *via* two screws 26. The PCB 24 is in electrical contact with the batteries 16 *via* two contact pieces 28. To the PCB 24 are also electrically connected a resistor 30, a green light-emitting diode (LED) 32 and a laser-emitting module 34.

Secured between the top housing 12 and the bottom housing 14 are an extruded tube bracket 36 and an extruded laser bracket 38. Both the tube bracket 36 and laser bracket 38 are provided by saw cutting extruded appropriately-shaped aluminium rods. The advantage of this is that the tube bracket 36 and laser bracket 38 are more rigid, and yet light-weight. The tube bracket 36 and laser bracket 38 are engaged with each other *via* a pair of screws 40.

A first spirit level tube 42 is partly received within a trough 42a of the tube bracket 36 and a second spirit level tube 44 is partly received within a trough 44a of the tube bracket 36, such that the two level tubes 42, 44 are perpendicular to each other. The laser-emitting module 34 is engaged with the laser bracket 38 *via* a pair of screws 52. Positioned between the laser-emitting module 34 and the laser bracket 38 is a resilient O-ring 46, which may be made of rubber, which allows a certain degree of play between the laser-emitting module and the laser bracket 38, to be adjusted by adjustment screws 48, 52.

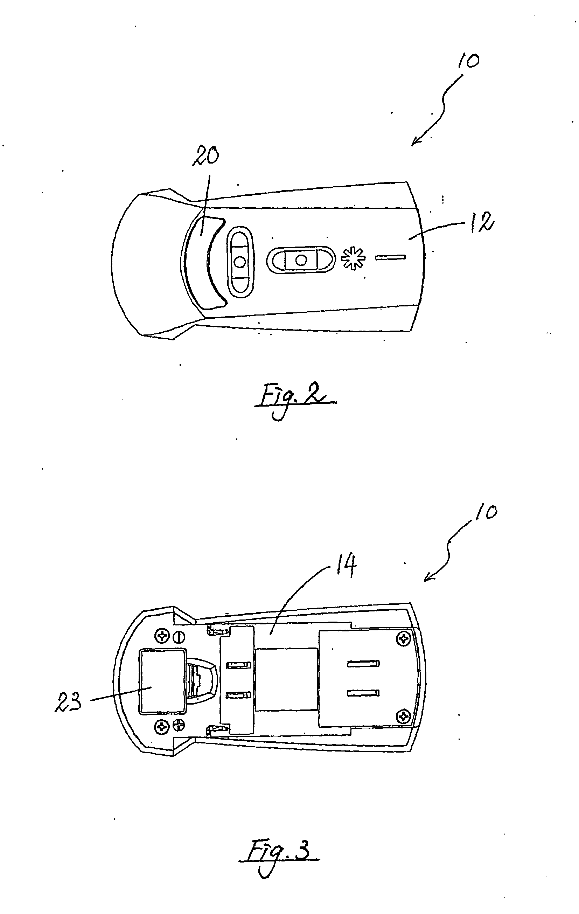

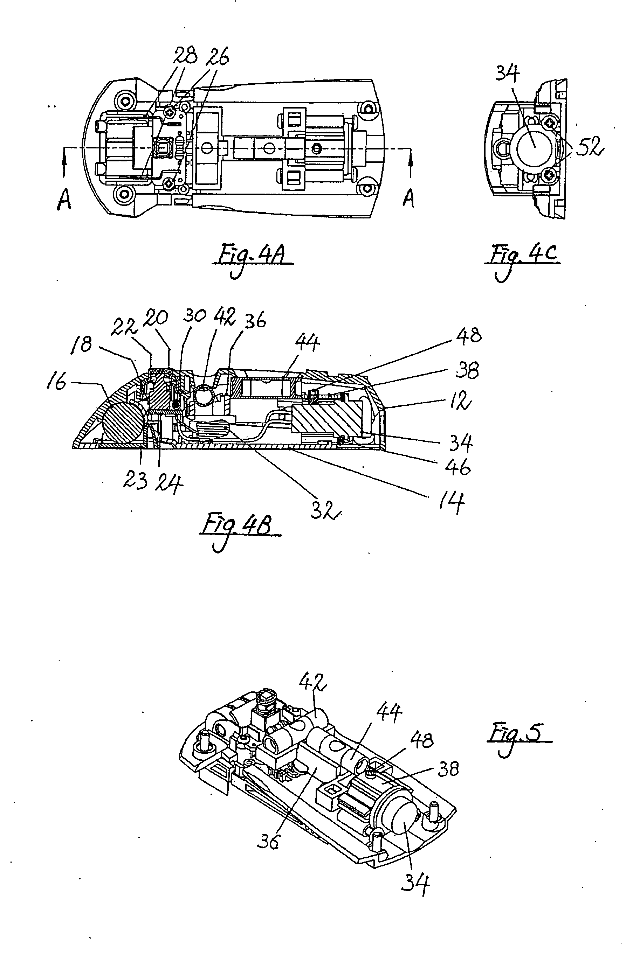

As can be seen in Fig. 2, when the laser level 10 is duly assembled, the two level tubes 42, 44 are perceivable through perpendicular slots 54, 56 of the top housing 12 respectively. It can also be seen, in particular from Fig. 4A, that, in this embodiment, the spirit level tube 42 is perpendicular to the longitudinal axis of the laser level 10, whereas the spirit level tube 44 is parallel to the longitudinal axis of the laser level 10, and that the laser-emitting module 34 is also parallel to the longitudinal axis of the laser level 10.

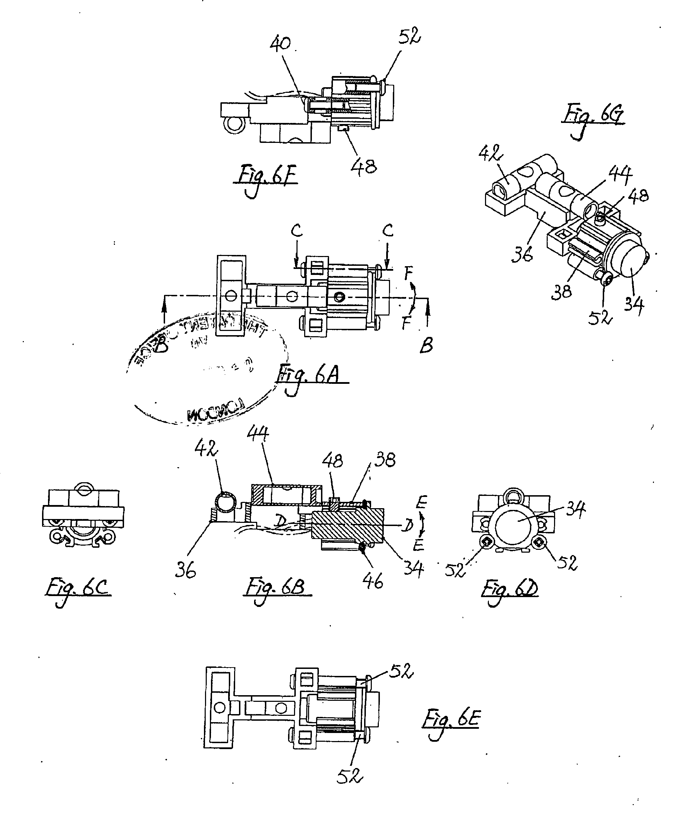

Turning to Figs. 6A to 6G, it can be seen that the position of the laser-emitting module 34 relative to the laser bracket 38 is adjustable by three adjustment screws 48, 52. As shown in Fig. 6B, the adjustment screw 48 extends through a hole 50 (see Fig. 1) into the internal cavity of the laser bracket 38 and abuts an outer surface of the laser-emitting module 34. Thus, by rotating the screw 48, the longitudinal axis D-D of the laser-emitting module 34 will swivel on a first plane and in the direction indicated by the bi-directional arrow E-E.

As shown in Fig. 6A, by rotating one or both of the adjustment screws 52, the longitudinal axis of the laser-emitting module 34 (which in the case of Fig. 6A coincides with the line B-B) will swivel on a second plane and in the direction indicated by the bi-directional arrow F-F. It should also be noted that the first and second planes are perpendicular to each other.

It should be understood that the above only illustrates an example whereby the present invention may be carried out, and that various modifications and/or alterations may be made thereto without departing from the spirit of the invention.

It should also be understood that certain features of the invention, which are, for clarity, described in the context of separate embodiments, may be provided in combination in a single embodiment. Conversely, various features of the invention which are, for brevity, described in the context of a single embodiment, may also be provided separately or in any appropriate sub-combinations.

## Claims

1. A laser level including:
at least a spirit level tube fixedly engaged with a first extruded engagement member; and
at least a laser emitter fixedly engaged with a second extruded engagement member,
wherein said first and second engagement members are engaged with each other.

2. A laser level according to Claim 1 wherein said first engagement member is fixedly engaged with at least two spirit tubes.

3. A laser level according to Claim 1 wherein said first engagement member is made at least principally of extruded aluminium.

4. A laser level according to Claim 1 wherein said second engagement member is made at least principally of extruded aluminium.

5. A laser level according to Claim 1 wherein said first and second engagement members are engaged with each other *via* at least a first screw member.

6. A laser level according to Claim 1 wherein said laser emitter is movable relative to said second engagement member.

7. A laser level according to Claim 6 wherein at least a second screw member is operable to move said laser emitter relative to said second engagement member.

8. A laser level according to Claim 7 wherein said second screw member is operable to move said laser emitter relative to said second engagement member on a first plane.

9. A laser level according to Claim 8 further including a third screw member which is operable to move said laser emitter relative to said second engagement member on a second plane.

10. A laser level according to Claim 9 wherein said first plane and said second plane are substantially perpendicular to each other.
